# EUROPEAN PATENT SPECIFICATION

(11) **EP 0 710 588 B1**
(45) Date of publication and mention of the grant of the patent: **07.01.1999**
(21) Application number: 95202870.2
(22) Date of filing: 24.10.1995
(51) Int. Cl.: B60R 9/06

(54) **An apparatus for securing a load carrier to the ball hitch of a vehicle**
Vorrichtung zum Festmachen eines Lasthalters an die Zugkugel eines Kraftfahrzeuges
Dispositif pour fixer un porte-charge sur la boule d'attelage d'un véhicule

(30) Priority: 04.11.1994 SE 9403784
(43) Date of publication of application: 08.05.1996
(73) Proprietor: Industri AB Thule, S-330 33 Hillerstorp (SE)
(72) Inventor: Johansson, Lars-Olof, S-514 95 Grimsas (SE)
(74) Representative: Wallengren, Yngvar

(56) References cited:
- WO-A-92/12027
- WO-A-93/04895
- DE-A- 4 135 794
- FR-A- 2 684 056
- NO-B- 174 246
- US-A- 4 412 635

## Description

### TECHNICAL FIELD

The present invention relates to an apparatus for securing a load carrier, such as a cycle bracket or the like, to the ball hitch of a vehicle, and comprises a body portion with means for securing the load carrier to the body portion, with an upper support surface for cooperation with the towing ball and a lower support surface for cooperation with the neck of the ball hitch, a clamping member located vertically between the upper and lower support surfaces, and a clamping device for forcibly operating the clamping member movable between an open position for mounting of the apparatus on and dismounting it from the ball hitch, and a clamping position in abutment against the neck or the towing ball proper.

### BACKGROUND ART

An apparatus for securing a load carrier to the ball hitch of a vehicle is previously known from WO 93/04895. This apparatus comprises two relatively short, U-shaped profiles which, in their web portions, are provided with cup-shaped depressions with surfaces which are complementary to at least a part of the ball hitch. At their one end, the profiles are pivotally joined together and, at the opposite ends, they are interconnected via an eccentric lock device such that they may be clamped against one another and thereby against the interjacent ball hitch.

The design according to this publication possesses a major advantage in that it is in surface abutment against the ball hitch, whereby this does not run the risk of being damaged.

However, this particular design and construction suffers from a serious drawback in that the abutment pressure which can be brought to bear against the ball hitch is only sufficient for carrying relatively limited loads.

An additional circumstance which further worsens the situation is the fact that the area of engagement with the ball hitch is limited largely to the towing ball proper and only a very short portion of the neck located beneath the ball.

Patent Specification SE B 8803773-4 discloses a cycle carrier or holder of the type which has two upwardly directed carrier arms making an angle with one another. These carrier arms are pivotal in relation to one another about an axis which is longitudinal in relation to the vehicle on which the cycle carrier is mounted.

The one arm is secured in a downwardly open cup-shaped fitting which abuts from above against the top of the ball hitch and which, at its lower end, has two tipped screws which abut with a pitch of 120° against the neck of the ball hitch, preferably a considerable distance down on the neck. The second arm is pivotal in a position slightly spaced above the top of the ball hitch and has, in its lower end, a corresponding tipped screw which, on pivoting of the upper parts of the arms away from one another, is applied against the border area between the towing ball and its neck.

This construction displays an engagement height with the ball hitch which is greater than the above-described design and construction and, as a result, has every potential for better stability. However, it suffers from the serious flaw that tipped or pointed screws are employed for engagement with the neck of the towing ball, whereby damage to the neck region may easily occur.

Nor can the cycle carrier or holder according to SE B 8803773-4 be designed in such a manner as to act as an adapter serving for carrying alternative loads such as ski racks, load carrying baskets or the like.

FR-A-2 684 056 discloses a ball hitch coupling having a housing with side walls, an end wall and an upper wall. The housing has an opening in its lower side for allowing the insertion of the ball. Between the side walls there is provided a movable jaw guided linearly by means of a pin extending through an elongated opening and by means of a pivotable arm. The arm is movable under influence of an operating device to clamp the jaw against the periphery of the ball. Internally, the housing has friction enhancing material to abut the ball.

In this device clamping takes place against the spherical surface of the ball only. This means that the resistance against rotating the coupling on the ball is pour.

NO-B-174 246 discloses a bicycle holder designed for being carried by a ball hitch. The holder has a housing for receiving the ball. At the lower end of the housing there is provided a displaceable support slide having an open position and a closed position. In the open position the slide has an opening aligned with the housing so that the ball could be inserted through the opening into the house. In the closed position the slide aligns an elongated opening with the housing. This opening is dimensioned for allowing the neck of the ball hitch to extend through the opening while the ball is received in the housing. On top of the housing there is provided a clamping screw for pressing the ball downwardly to support on the support slide, the latter being in the closed position.

This bicycle holder could not be safety clamped onto a ball hitch as the clamping action is not sufficient. Particularly bad is its resistance against rotational movements about the vertical central axis of the ball and its neck.

### PROBLEM STRUCTURE

The present invention has for its object to devise the apparatus intimated by way of introduction such that the drawbacks inherent in the prior art apparatuses are obviated. In particular, the present invention has for its object to realise an apparatus which may form the basis in a complete system for load transport on the ball hitch of a vehicle. Furthermore, the present invention has for its object to realise an apparatus which provides a high degree of stability, load carrying capacity and mechanical strength, which may simply and conveniently be mounted in place and dismounted from the ball hitch, and which in addition may be manufactured in a simple and rational manner.

### SOLUTION

The objects forming the basis of the present invention will be attained if the apparatus member by way of introduction is characterized in that the clamping portion has an aperture through which the towing ball of the ball hitch, and possibly a part of its neck, may be passed on mounting and dismounting of the apparatus on the ball hitch.

This particular design feature affords advantages in simple and convenient mounting in place, and extremely good mechanical strength in that the clamping portion surrounds the towing ball of the ball hitch. The design according to the present invention also provides the possibility for a highly compact construction.

Further advantages will be attained if the apparatus according to the present invention is given one or more of the characterizing features as set forth in appended Claims 2 to 13.

### BRIEF DESCRIPTION OF THE ACCOMPANYING DRAWINGS

The present invention will now be described in greater detail hereinbelow, with particular reference to the accompanying Drawings. In the accompanying Drawings:
- Fig. 1: is a view from the rear of a complete cycle carrier or holder for mounting on the ball hitch of a vehicle;
- Fig. 2: is a vertical side elevation of the cycle carrier of Fig. 1;
- Fig. 3: is a vertical section taken approximately along the section marking A-A in Fig. 1 through the adapter of the cycle carrier intended for securement on the ball hitch, with the adapter in the locked position;
- Fig. 4: is a view corresponding to that of Fig. 3 in the open position;
- Fig. 5: is a vertical cross section taken approximately along the section marking B-B in Fig. 4; and
- Fig. 6: is a perspective view taken obliquely from the front of a body portion included in the adapter.

### DESCRIPTION OF PREFERRED EMBODIMENT

In the following description, and also in the appended Claims, directional and positional disclosures will be employed such as 'forwards', 'rearwards', 'upper', 'lower', etc. These disclosures relate to the subject matter of the present invention mounted on a vehicle, as well as the normal driving direction of the vehicle itself.

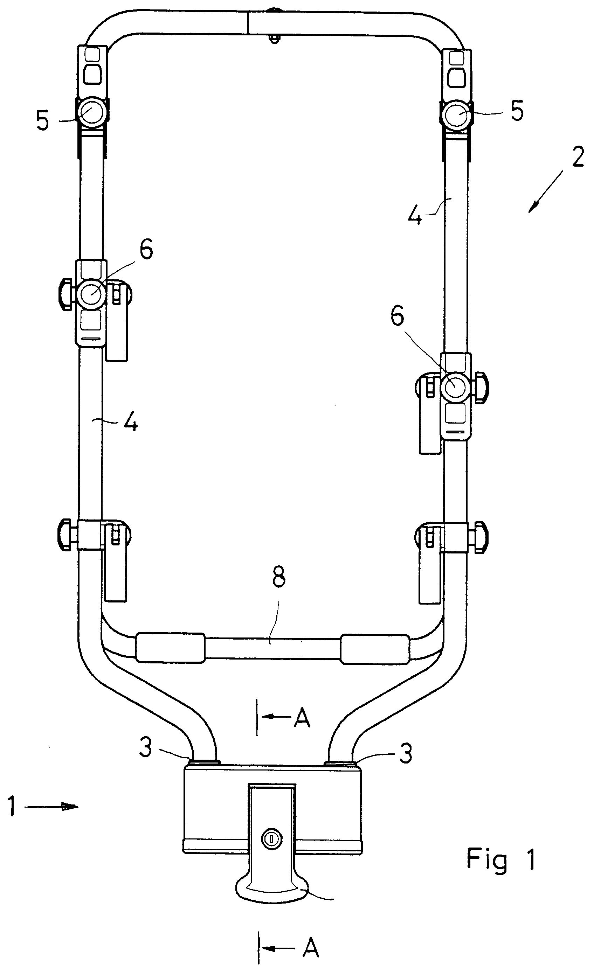

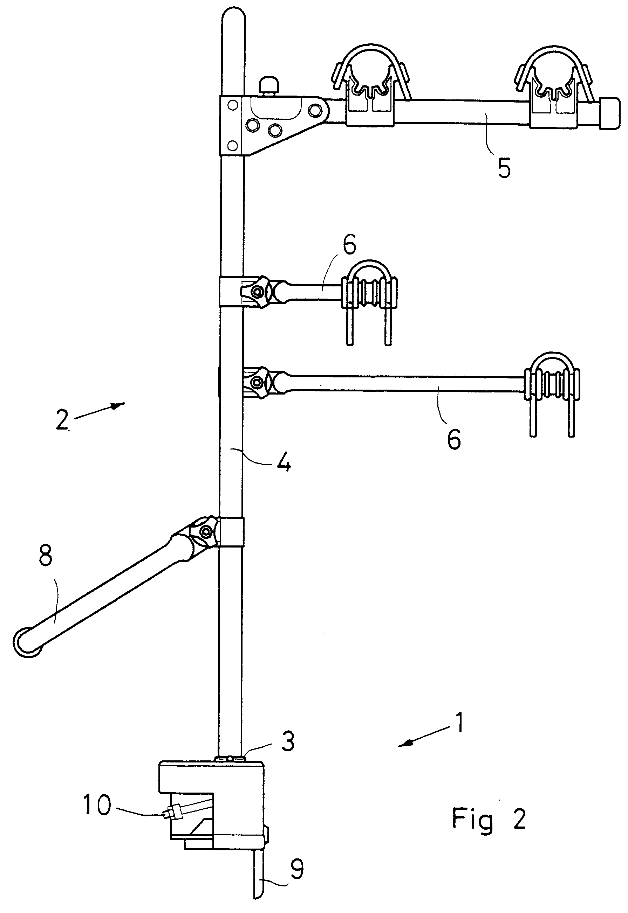

Figs. 1 and 2 show the present invention applied to a cycle carrier which comprises an adapter 1 for fixing on the ball hitch of a vehicle and the cycle carrier 2 proper, which extends upwards from the adapter and is secured therein. The adapter 1 has anchorage means 3 for the dismountable anchorage of the cycle carrier 2.

The conceived purpose of the adapter 1 is to act as the basis in a larger transport system in which other types of load carrying equipment instead of the cycle carrier may be employed, such as, for instance, load carrying baskets, ski racks, etc.

According to the invention, the cycle carrier 2 is composed of a frame 4 which has two lower, vertically downwardly directed tubes which are accommodated and secured in the anchorage means 3 of the adapter 1. At its upper end, the frame 4 is provided with two rearwardly, outwardly pivotal carrier arms 5 on which two bicycles may be suspended. Further, the frame 4 has two rearwardly directed retainer arms 6 which are intended to be secured in the cycles suspended on the arms 5 so that they are prevented from swinging to and fro. Furthermore, a forwardly directed support stirrup 8 is secured in the frame and is intended to rest against the fenders or bumpers of the vehicle, or possibly against its rear wall panel surface in order thereby to prevent the cycle carrier 2 from swinging back and forth and in order to absorb such forwardly directed forces as occur in the event of hard braking.

Preferably, those parts which are secured to the frame 4 may be dismounted and replaced so that the frame can be employed for mounting other types of load carriers such as ski racks etc.

The adapter 1 has a clamping device with a clamping portion 10 which, in the open position, allows the adapter and the load carrier placed thereon simply to be lifted off and on to the ball hitch of the vehicle in that the towing ball (and possibly a part of the neck of the towing ball) is passed through an aperture in the clamping portion. The clamping device is operable by the action of a handle 9 and, in the closed position, locks the clamping portion in hard abutment against the towing ball of the vehicle, so that the adapter and the load carrier mounted thereon will hereby be reliably positionally fixed.

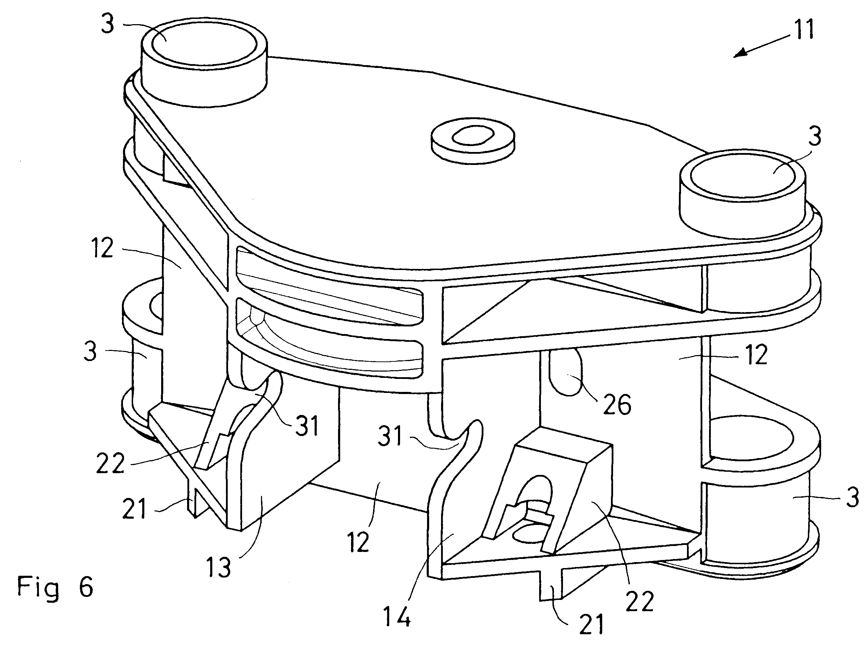

The adapter 1 is constructed around a housing or body portion 11 (see Fig. 6) which has a transverse, substantially vertical wall 12 centrally in the region of its longitudinal direction. On the front face of the transverse wall 12, there are provided two vertical and substantially parallel longitudinal walls 13 and 14, respectively which are disposed in such mutual spaced apart relationship that they can accommodate therebetween a ball hitch 15 mounted on a vehicle, with the neck 16 and towing ball 17.

Between the upper parts of the two longitudinal walls 13 and 14, the body portion or housing 11 has an upper support surface 18 which is preferably spherical in configuration and which extends vertically down to the equatorial plane of the towing ball 17, but which may suitably have a discontinuation 19 at the top of the towing ball 17. Consequently, the upper support surface 18 is spherically annular.

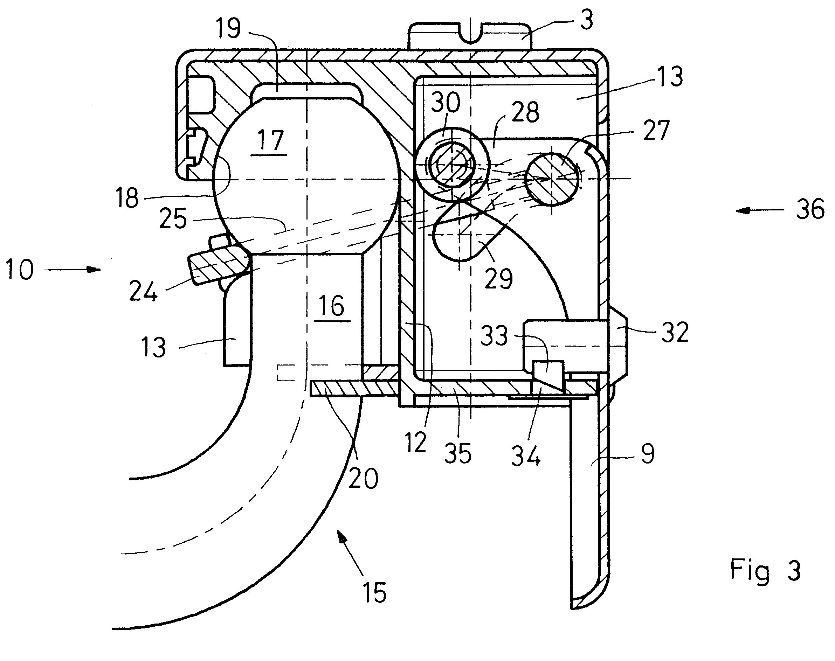

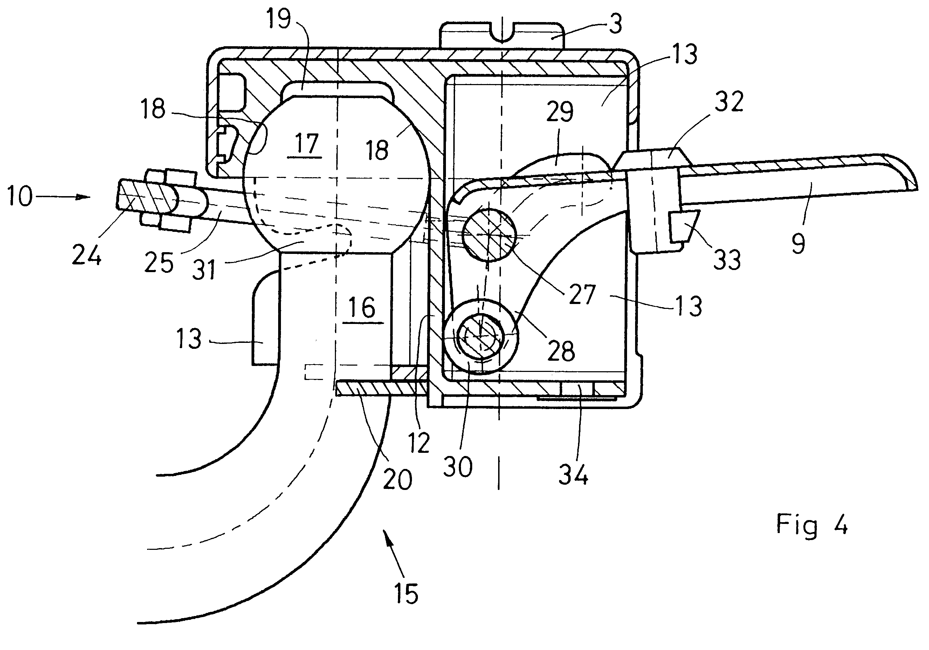

At the lower end of the body portion 11, there is located a lower support portion 20 (Figs. 3 and 4) with a lower support surface. The support portion 20 rests against the underside of the body portion 11 and is guided between two downwardly directed ribs 21 thereon. The support portion 20 has a forwardly open, approximately U-shaped recess whose edge forms the lower support surface and abuts against the neck 16 of the towing ball. The recess is designed such that its arched lower edge follows the configuration of the neck and surrounds the neck along a considerable angle, preferably up to 180°. In addition, the opposing side edges of the recess may extend a further distance forwards.

The lower support portion 20 is replaceable and is mounted by means of screws in heels 22 in the body portion 21. As a result of the replaceable capability of the support portion 20, the design of the lower support surface may readily be adapted to the design of any given type of ball hitch.

For clamping the adapter 1 on the ball hitch, the adapter is provided with a clamping portion 10 which, in Fig. 3, is shown in its clamping position in hard abutment against the lower side of the towing ball 17 and against the upper portion of the neck 16. In Fig. 4, the clamping portion 10 is shown in the open position in which the adapter, after a light turning in a counterclockwise direction, may be lifted away from the ball hitch 15.

For the above-described simple dismounting and mounting to be possible, the clamping portion 10 has a through-going aperture through which the towing ball extends. Furthermore, the clamping portion 10 is, during its opening and closing movements, mobile such that it is partly displaced away from the towing ball 17 and the neck 16 and partly is lifted or pivoted upwards in a direction towards the upper support surface 18.

The clamping portion 10 includes a transverse yoke 24 which is intended for abutment against the ball hitch 15. At each end, the yoke 24 is connected to a draw bolt 25 which is located on the outside of each respective longitudinal wall 13 and 14. On its side facing towards the ball hitch 15, the yoke 24 is of arched configuration so that surface abutment is achieved against the towing ball. The yoke 24 is further restrictedly displaceable along both of the draw bolts 25. The draw bolts are provided with arrest means and, between these arrest means and the yoke, there are provided spring elements which, on application of the clamping portion 10 against the towing ball, are disposed to be compressed.

The transverse wall 12 has two apertures 26 (Fig. 6) through which extend the draw bolts 25. Thus, the draw bolts are displaceable in their longitudinal directions through the apertures 26, but may also be tilted therein so that their forward ends supporting the yoke 24 are raisable and lowerable. On the rear side of the transverse wall 12, the draw bolts 25 are secured in a crossbar 27 which is rotatably accommodated in a corner region of an angular fulcrum or lever portion 36 with one longer shank 9 and one shorter shank 28. The longer shank is, as will have been apparent from the foregoing disclosures, designed as a handle for operating the apparatus according to the present invention.

The draw bolts 25 are further disposed for cooperation with guides 29 in such parts of the two longitudinal walls 13 and 14 as are located on the rear side of the transverse wall 12. The guides 29 are designed as through-going grooves in the above-mentioned longitudinal walls. The guides have upper portions which are located at relatively large spaced apart relationship from the transverse wall 12, and lower portions which are located at considerably shorter spaced apart relationship from the transverse wall. Between their ends, the guides are convexly curved upwards. This implies that, when the crossbar 27 is displaced from the upper end portions of the guides to the lower, the draw bolts 25 will be displaced in a longitudinal direction through the apertures 26 with the yoke 24 away from the ball hitch 15. At the same time however, the crossbar 27 will be lowered in relation to the apertures 26 whereby the draw bolts will be pivoted such that the yoke 24 is raised. Suitably, the longitudinal direction of the upper ends of the guides 29 is approximately horizontal and at right angles to the transverse wall 12.

On pivoting of the lever portion 36, the shorter shank 28 is intended to move vertically along the rear side of the transverse wall 12. In order to reduce friction and wear, the free end of the shorter shank 28 is provided with roller means 30 which are intended to roll against the transverse wall. Hereby, the lever portion with the shanks 9 and 29 and the crossbar 27 will function as an eccentric lock for the draw bolts 25.

The range of movement of the lever portion 36 is such that, in the locked position (see Fig. 3), it lies in a line between the centre of the crossbar 27 and the point of contact of the shorter shank 28 with the transverse wall 12 a short distance above the centre line of the draw bolts 25. In the open position (which is shown in Fig. 4), the above-mentioned line has passed considerably beyond the longitudinal direction of the draw bolts. Thus, the eccentric locking of the draw bolts 25 is self-locking in operation.

In order to facilitate operation of the apparatus according to the present invention, in order to prevent rattling and in order to ensure the displacement of the yoke 24 a sufficient distance away from the ball hitch 15 on opening, return springs are disposed about the draw bolts 25. These return springs abut against the front side of the transverse wall 12 in the region of the apertures 26 and against the side of the yoke facing towards the above-mentioned wall.

In order to increase stability in the clamping of the yoke 24 against the towing ball 17, both of the longitudinal walls 13 and 14 are provided with forwardly open grooves 31 for accommodating the yoke 24 so that this is guided in the vertical direction.

To prevent unintentional opening of the handle 9 and thereby also to prevent unauthorised dismantling of the adapter 1 from the ball hitch 15, the handle 9 has a lock unit 32 with a locking heel 33 which engages in a corresponding recess 34 in a lower wall 35 in the housing or body portion 11.

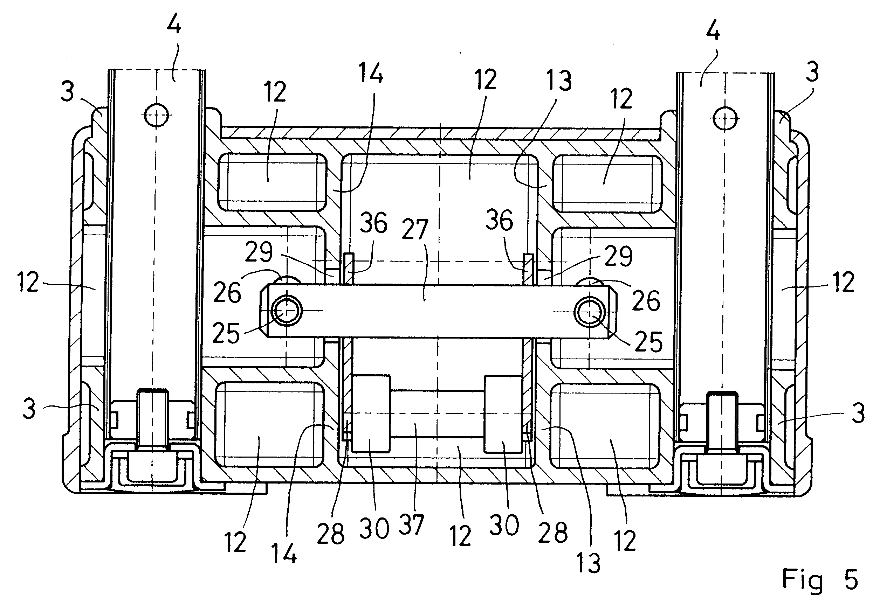

It will be apparent from Fig. 5 that the two draw bolts 25 are fixed in opposite end portions of the crossbar 27 and, inside the draw bolts 25, the crossbar 27 extends through the grooves or guides 29 in both walls 13 and 14. Inside the walls 13 and 14, the bar 27 then extends through the lever portion 36. The shorter shanks 28 on the lever portion have transverse shafts 37 on which the roller means 30 are disposed, for example in the form of sealed-for-life ball bearings.

## Claims

1. An apparatus for securing a load carrier, such as a cycle bracket or carrier (2), to the ball hitch (15) of a vehicle, comprising a body portion (11), with means (3) for securing the load carrier to the body portion, with an upper support surface (18) for cooperation with the towing ball (17) and a lower support surface for cooperation with the neck (16) of the ball hitch, a clamping member (10) located vertically between the upper and lower support surfaces and a clamping device for forcibly operating the clamping member where by it is movable between an open position for mounting of the apparatus on and dismounting it from the ball hitch, and a clamping position in abutment against the neck (16) or the towing ball (17), **characterized** in that the clamping member (10) has an aperture through which the towing ball (17) of the ball hitch (15), and possibly apart of its neck (16), maybe passed on mounting and dismounting of the apparatus on the ball hitch.

2. The apparatus as claimed in claim 1, **characterized** in that the clamping device, on the opening movement of the clamping member (10), is operative to displace that portion (24) of the clamping member designed for engagement with the ball hitch not only away from the ball hitch (15) but also upwardly towards the upper support surface (18).

3. The apparatus as claimed in claim 1 or 2, **characterized** in that the clamping member (10) includes two mutually approximately parallel draw bolts (25) whose one ends are interconnected by the intermediary of a transverse yoke (24) for abutment against the ball hitch (15); and that the draw bolts extend each through their aperture (26) in a transverse and substantially vertical wall (12) in the body portion (11), the draw bolts being disposed to be partly longitudinally displaceable in the apertures and partly tiltable therein.

4. The apparatus as claimed in claim 3, **characterized** in that the ends of the draw bolts (25) facing away from the yoke (24) are mutually interconnected by the intermediary of a crossbar (27); that the crossbar is movable in guides (29) in the body portion (11), said guides having upper ends which are located in spaced apart relationship to the transverse wall (12), and lower ends which are located more proximal the transverse wall, and the crossbar being located at the upper ends of the guides in the clamping position of the clamping member (10) and in their lower ends in the open position of the clamping portion.

5. The apparatus as claimed in claim 4, **characterized** in that the guides (29) are curved convexly upwards; and that their upper end portions have longitudinal directions which are substantially horizontal.

6. The apparatus as claimed in claim 4 or 5, **characterized** in that the guides (29) are designed as through-going grooves in mutually substantially parallel, longitudinal walls (13, 14) in the body portion (11), said walls extending substantially vertically and at right angles out from the transverse wall (12).

7. The apparatus as claimed in any of claims 4 to 6, **characterized** in that the crossbar (27) is pivotally connected with a corner region of an angular lever portion (36) which has a longer shank (9) designed as a handle for operating the clamping device and a shorter shank (28) which, on pivoting of the lever portion, is operative to move in a vertical direction along the transverse wall (12).

8. The apparatus as claimed in claim 7, **characterized** in that the shorter shank (28) of the lever portion (36) is provided with roller means (30) disposed to roll against the transverse wall (12).

9. The apparatus as claimed in claim 7 or 8, **characterized** in that in the clamping position of the clamping member (10), the portion (30) of the shorter shank (28) cooperating with the transverse wall (12) is located a slight distance above the centre line of the draw bolts (25), while the portion (30) is located below the centre line in the open position of the clamping portion (10).

10. The apparatus as claimed in any of claims 1 to 9, **characterized** in that the lower support surface is disposed on a lower support portion (20) which is replaceable for adapting to the configuration of the neck (16).

11. The apparatus as claimed in any of claims 3 to 10, **characterized** in that the yoke (24) is displaceable somewhat along the draw bolts (25); and that spring elements are provided between the yoke and arrest means on the draw bolts, said spring elements being disposed to be compressed on transfer by the clamping device to the clamping position.

12. The apparatus as claimed in any of claims 3 to 11, **characterized** in that the spring elements are provided about the draw bolts (25), said return spring elements abutting with their one end against the yoke (24) and with their other end against the transverse wall (12) and being, on opening of the clamping device, disposed to actuate the yoke away from the transverse wall (12).

13. The apparatus as claimed in any of claims 3 to 12, **characterized** in that substantially vertical walls (13, 14) are provided on either side of the ball hitch (15), said walls being approximately at right angles to the transverse wall (12); and that the yoke (24) is retractable and vertically guided in recesses (31) in these walls.

## Patentansprüche

1. Vorrichtung zum Befestigen eines Lastenträgers, wie beispielsweise eine Fahrradstütze oder -träger (2), an der Anhängerkugelkupplung (15) eines Fahrzeugs, mit einem Gehäuseteil (11), mit einer Einrichtung (3) zum Befestigen des Lastenträgers an dem Gehäuseteil, mit einer oberen Stützfläche (18) zum Zusammenwirken mit der Zugkugel (17) und einer unteren Stützfläche zur Zusammenwirkung mit dem Hals (16) der Anhängerkugelkupplung, mit einem Klemmelement (10), welches vertikal zwischen den oberen und unteren Stützflächen angeordnet ist und mit einer Klemmvorrichtung, um das Klemmelement durch Krafteinwirkung zu bedienen, wodurch es zwischen einer offenen Position zum Montieren der Vorrichtung an der Anhängerkugelkupplung und Lösen von dieser, und einer Klemmposition in Anlage an dem Hals (16) oder der Zugkugel (17) beweglich ist, dadurch gekennzeichnet, daß das Klemmelement (10) eine Öffnung aufweist, durch welche die Zugkugel (17) der Anhängerkugelkupplung (15) und gegebenenfalls ein Teil ihres Halses (16) passieren können, wenn die Vorrichtung an der Anhängerkugelkupplung montiert und gelöst wird.

2. Vorrichtung nach Anspruch 1, dadurch gekennzeichnet, daß die Klemmvorrichtung bei der Öffnungsbewegung des Klemmelements (10) so wirkt, daß derjenige Abschnitt (24) des Klemmelements, welcher zum Eingriff mit der Anhängerkugelkupplung ausgebildet ist, nicht nur von der Anhängerkugelkupplung (15) weg, sondern auch nach oben in Richtung der oberen Stützfläche (18) verschoben wird.

3. Vorrichtung nach Anspruch 1 oder 2, dadurch gekennzeichnet, daß das Klemmelement (10) zwei zueinander ungefähr parallele Zugbolzen (25) beinhaltet, deren eine Enden mittels eines transversalen Jochs (24) zur Anlage an der Anhängerkugelkupplung (15) verbunden sind; und daß die Zugbolzen sich jeweils durch ihre Öffnung (26) in eine transversale und im wesentlichen vertikale Wand (12) in dem Gehäuseteil (11) erstrecken, wobei die Zugbolzen so angeordnet sind, daß sie zum Teil in Längsrichtung in den Öffnungen verschiebbar und zum Teil darin kippbar sind.

4. Vorrichtung nach Anspruch 3, dadurch gekennzeichnet, daß die dem Joch (24) abgewandten Enden der Zugbolzen (25) gegenseitig mittels einer Querstange (27) verbunden sind; daß die Querstange in Führungen (29) in dem Gehäuseteil (11) beweglich ist, wobei die Führungen obere Enden, die in einem beabstandeten Verhältnis zu der transversalen Wand (12) angeordnet sind, und untere Enden haben, die näher zu der transversalen Wand angeordnet sind, und die Querstange in der Klemmposition des Klemmelements (10) an den oberen Enden der Führungen, und in der geöffneten Position des Klemmabschnitts in ihren unteren Enden angeordnet ist.

5. Vorrichtung nach Anspruch 4, dadurch gekennzeichnet, daß die Führungen (29) konvex nach oben gekrümmt sind und daß ihre oberen Endabschnitte Längsrichtungen haben, welche im wesentlichen horizontal sind.

6. Vorrichtung nach Anspruch 4 oder 5, dadurch gekennzeichnet, daß die Führungen (29) als durchgehende Aussparungen in zueinander im wesentlichen parallelen längsverlaufenden Wänden (13, 14) in dem Gehäuseteil (11) ausgebildet sind, wobei die Wände sich im wesentlichen vertikal und im rechten Winkel von der transversalen Wand (12) (heraus) erstrecken.

7. Vorrichtung nach einem der Ansprüche 4 bis 6, dadurch gekennzeichnet, daß die Querstange (27) schwenkbar mit einem Eckbereich eines winkeligen Hebelabschnitts (36) verbunden ist, welcher einen längeren Schenkel (9), welcher als Griff zur Handhabung der Klemmvorrichtung ausgebildet ist, und einen kürzeren Schenkel (28) aufweist, welcher bei Verschwenken des Hebelabschnitts so wirkt, daß er sich in einer vertikalen Richtung entlang der transversalen Wand (12) bewegt.

8. Vorrichtung nach Anspruch 7, dadurch gekennzeichnet, daß der kürzere Schenkel (28) des Hebelabschnitts (36) mit einer Rolleinrichtung (30) versehen ist, die so angeordnet ist, daß sie an der transversale Wand (12) rollt.

9. Vorrichtung nach Anspruch 7 oder 8, dadurch gekennzeichnet, daß in der Klemmposition des Klemmelements (10) die Rolleinrichtung (30) des kürzeren Schenkels (28), welche mit der transversalen Wand (12) zusammenwirkt, in einem geringen Abstand oberhalb der Mittellinie der Zugbolzen (25) angeordnet ist, wohingegen die Rolleinrichtung (30) in der offenen Position des Klemmabschnitts (10) unterhalb der Mittellinie angeordnet ist.

10. Vorrichtung nach einem der Ansprüche 1 bis 9, dadurch gekennzeichnet, daß die untere Stützfläche an einem unteren Stützabschnitt (20) angeordnet ist, welcher zur Anpassung an die Ausbildung des Halses (16) ausgetauscht werden kann.

11. Vorrichtung nach einem der Ansprüche 3 bis 10, dadurch gekennzeichnet, daß das Joch (24) entlang den Zugbolzen (25) etwas verschiebbar ist und daß Federelemente zwischen dem Joch und einer Stop-Vorrichtung an den Zugbolzen vorgesehen sind, wobei die Federelemente so angeordnet sind, daß sie beim Übergang durch die Klemmvorrichtung in die Klemmposition komprimiert werden.

12. Vorrichtung nach einem der Ansprüche 3 bis 11, dadurch gekennzeichnet, daß die Federelemente um die Zugbolzen (25) herum vorgesehen sind, daß die Rückstell-Federelemente mit ihrem einen Ende an dem Joch (24) und mit ihrem anderen Ende an der transversalen Wand (12) anliegen und bei Öffnen der Klemmvorrichtung so angeordnet sind, daß sie das Joch von der transversalen Wand (12) weg betätigen.

13. Vorrichtung nach einem der Ansprüche 3 bis 12, dadurch gekennzeichnet, daß im wesentlichen vertikale Wände (13, 14) auf jeder Seite der Anhängerkugelkupplung (15) vorgesehen sind, wobei die Wände ungefähr im rechten Winkel zu der transversalen Wand (12) sind, und daß das Joch (24) einziehbar ist und vertikal in Aussparungen (31) in diesen Wänden geführt ist.

## Revendications

1. Appareil pour fixer un porte-charge, tel qu'un portique ou un porte-bicyclette (2), à l'attelage à boule (15) d'un véhicule, qui comprend un corps (11), comportant des moyens (3) de fixation du porte-charge au corps, avec une surface de support supérieure (18) pour coopération avec la boule de remorquage (17) et une surface de support inférieure pour coopération avec le collet (16) de l'attelage à boule, un élément de blocage (10) placé verticalement entre les surfaces de support supérieure et inférieure, et un dispositif de blocage pour manoeuvrer de façon forcée l'élément de blocage de sorte qu'il est déplaçable entre une position ouverte pour le montage de l'appareil sur l'attelage à boule et son démontage de celui-ci, et une position de blocage en butée contre le collet (16) ou la boule de remorquage (17), caractérisé en ce que l'élément de blocage (10) présente une ouverture à travers laquelle la boule de remorquage (17) de l'attelage à boule (15), et éventuellement une partie de son collet (16), peuvent passer lors du montage et du démontage de l'appareil sur l'attelage à boule.

2. Appareil selon la revendication 1, caractérisé en ce que le dispositif de blocage, lors du mouvement d'ouverture de l'élément de blocage (10), agit pour déplacer la partie (24) de l'élément de blocage qui est prévue pour venir en prise avec l'attelage à boule, non seulement à l'opposé de l'attelage à boule (15) mais également vers le haut vers la surface de support supérieure (18).

3. Appareil selon la revendication 1 ou 2, caractérisé en ce que l'élément de blocage (10) comprend deux tiges de traction sensiblement mutuellement parallèles (25) dont des premières extrémités sont interconnectées par l'intermédiaire d'un joug transversal (24) pour venir en butée contre l'attelage à boule (15) ; et en ce que les tiges de traction traversent chacune leur trou respectif (26) ménagé dans une paroi transversale et sensiblement verticale (12) du corps (11), les tiges de traction étant disposées de manière à être partiellement longitudinalement déplaçables dans les trous et partiellement basculables dans ces derniers.

4. Appareil selon la revendication 3, caractérisé en ce que les extrémités des tiges de traction (25) situées à l'opposé du joug (24) sont mutuellement interconnectées par l'intermédiaire d'une traverse (27) ; et en ce que la traverse est déplaçable dans des guidages (29) prévus dans le corps (11), les dits guidages ayant des extrémités supérieures qui sont placées à distance de la paroi transversale (12) et des extrémités inférieures qui sont plus proches de la paroi transversale, la traverse étant située aux extrémités supérieures des guidages dans la position de blocage de l'élément de blocage (10) et à leurs extrémités inférieures dans la position ouverte de l'élément de blocage.

5. Appareil selon la revendication 4, caractérisé en ce que les guidages (29) ont une courbure convexe vers le haut ; et en ce que leurs parties d'extrémité supérieures ont des direction longitudinales qui sont sensiblement horizontales.

6. Appareil selon la revendication 4 ou 5, caractérisé en ce que les guidages (29) sont sous la forme de rainures traversantes ménagées dans des parois longitudinales mutuellement sensiblement parallèles (13, 14) du corps (11), les dites parois s'étendant sensiblement verticalement et perpendiculairement vers l'extérieur par rapport à la paroi transversale (12).

7. Appareil selon une quelconque des revendications 4 à 6, caractérisé en ce que la traverse (27) est reliée de façon pivotante avec une région de coude d'un levier coudé (36) qui comprend une plus longue branche (9) sous la forme d'une poignée de manoeuvre du dispositif de blocage et une plus courte branche (28) qui agit, lorsqu'on fait pivoter le levier, de manière à se déplacer dans une direction verticale le long de la paroi transversale (12).

8. Appareil selon la revendication 7, caractérisé en ce que la plus courte branche (28) du levier (36) est munie d'un galet (30) disposé de manière à rouler sur la paroi transversale (12).

9. Appareil selon la revendication 7 ou 8, caractérisé en ce que, dans la position de blocage de l'élément de blocage (10), la partie (30) de la plus courte branche (28) qui coopère avec la paroi transversale (12) est située à une légère distance au-dessus de l'axe des tiges de traction (25), tandis que cette partie (30) est située au-dessous de l'axe dans la position ouverte de l'élément de blocage (10).

10. Appareil selon une quelconque des revendications 1 à 9, caractérisé en ce que la surface de support inférieure est disposée sur une partie de support inférieure (20) qui est remplaçable pour l'adaptation à la configuration du collet (16).

11. Appareil selon une quelconque des revendications 3 à 10, caractérisé en ce que le joug (24) est légèrement déplaçable le long des tiges de traction (25) ; et en ce que des éléments élastiques sont prévus entre le joug et des moyens d'arrêt sur les tiges de traction, les dits éléments élastiques étant disposés de manière à être comprimés lors du transfert par le dispositif de blocage à la position de blocage.

12. Appareil selon une quelconque des revendications 3 à 11, caractérisé en ce que les éléments élastiques sont prévus autour des tiges de traction (25), les dits éléments élastiques de rappel étant en butée par leur première extrémité contre le joug (24) et par leur autre extrémité contre la paroi transversale (12), et étant disposés, lors de l'ouverture du dispositif de blocage, de manière à éloigner le joug de la paroi transversale (12).

13. Appareil selon une quelconque des revendications 3 à 12, caractérisé en ce que des parois sensiblement verticales (13, 14) sont prévues de part et d'autre de l'attelage à boule (15), les dites parois étant sensiblement perpendiculaires à la paroi transversale (12) ; et en ce que le joug (24) est rétractable et guidé verticalement dans des échancrures (31) ménagées dans ces parois.
